# EUROPÄISCHE PATENTANMELDUNG

(11) **EP 4 663 459 A1**
(43) Veröffentlichungstag der Anmeldung: **17.12.2025**
(21) Anmeldenummer: 25172460.5
(22) Anmeldetag: 25.04.2025
(51) Int. Cl.: B60L 3/00, B60L 50/64, G01F 23/284, G01M 11/08, H01M 10/42, H01M 10/48, G02B 6/38

(54) **UNTERBODENSYSTEM MIT LICHTWELLENLEITERN, VERFAHREN ZUM ERKENNEN EINER STÖRUNG SOWIE FAHRZEUG**

(30) Priorität: 10.05.2024 DE 102024204381
(71) Anmelder: VOLKSWAGEN AG, 38440 Wolfsburg (DE)
(72) Erfinder: Wick, Dipl.-Ing. Christian, 38440 Wolfsburg (DE)

(57) **Zusammenfassung**

Die Erfindung betrifft ein Unterbodensystem (3) für ein Fahrzeug (1) aufweisend eine Batterie (2) zur Bereitstellung von Antriebsenergie für das Fahrzeug (1), eine Schutzeinheit (4) zum Schutz der Batterie (2), eine Lichtleitereinheit (10) zum Erkennen einer Störung (210) der Schutzeinheit (4) mit zumindest zwei Lichtwellenleitern (11), durch welche jeweils ein Lichtsignal (200) leitbar ist, und eine Kontrolleinheit (20) mit einer Messeinheit (21) zum Ausführen einer optischen Messung (102) zum Erfassen jeweils zumindest eines Lichtparameters (201) der Lichtsignale (200) und einer Auswerteeinheit (22) zur Erkennung der Störung (210) anhand einer Auswertung der optischen Messung (102). Ferner betrifft die Erfindung ein Verfahren (100), sowie ein Fahrzeug (1).

## Beschreibung

Die Erfindung betrifft ein Unterbodensystem für ein Fahrzeug, ein Verfahren zum Erkennen einer Störung eines Unterbodensystems sowie ein Fahrzeug.

Aus dem Stand der Technik sind Fahrzeuge bekannt, bei denen sich eine Hochvoltbatterie entlang eines Unterbodens erstreckt. Bei derartigen Fahrzeugen können jedoch auf dem Untergrund hervorstehende Hindernisse von unten mechanisch auf die Hochvoltbatterie-Batterie einwirken, wenn es zu einem Kontakt des Fahrzeuges mit dem Hindernis kommt. Dies kann beispielsweise bei einem sog. Poller-Impact der Fall sein, bei welchem ein Poller überfahren wird. Bei hohen Aufsetzkräften kann das Fahrzeug jedoch in der Folge beschädigt werden, was die Funktion oder Sicherheit der Hochvoltbatterie beeinflussen kann.

Es ist daher ferner bekannt, einen mechanischen Schutz, insbesondere in Form eines sog. Unterfahrschutzes, unterhalb der Batterie vorzusehen. Es ist bekannt, diesen Schutz derart robust auszulegen, dass es bei einem Poller-Impact keine Einschränkung der Funktion der Batterie gibt. Dabei wird der Schutz derart ausgestaltet, dass der Schutz beim Wirken einer hohen Kraft von unten alle Kräfte für die darüberliegende Hochvoltbatterie aufnimmt und die Hochvoltbatterie somit schützt. Dadurch kann der Schutz jedoch ein hohes Gewicht umfassen und hohe Kosten bedingen. Außerdem ist dabei eine automatische Schädigungsdetektion i. d. R. nicht möglich.

Es ist daher beispielsweise aus dem Dokument DE 10 2021 122 983 A1 bekannt, eine Batterieanordnung und eine Schutzanordnung mit optischen Messfasern zu versehen, um eine Zerstörung der Schutzanordnung zu detektieren. Dabei sind die Messfasern in Form einer plattenartigen Schicht verlegt. Durch die Ausgestaltung ist jedoch eine Vielzahl von Sensoren an den Seiten der Anordnung erforderlich, um eine Zerstörung über die gesamte Fläche der Schutzanordnung erfassen zu können. Auch ist durch diese Ausgestaltung ein Eindringen von Flüssigkeit in die Schutzanordnung nicht ohne Weiteres detektierbar. Zudem ist es wünschenswert, eine Störung von anderen Änderungen der Betriebssituation, wie z. B. einer Temperaturänderung, unterscheiden zu können.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung ein vereinfachtes Unterbodensystem bereitzustellen, welches, insbesondere durch eine erhöhte Zuverlässigkeit, für ein Erkennen einer Störung funktional verbessert ist.

Die voranstehende Aufgabe wird gelöst durch ein Unterbodensystem mit den Merkmalen des Anspruchs 1, ein Verfahren mit den Merkmalen des Anspruchs 14, sowie ein Fahrzeug mit den Merkmalen des Anspruchs 15. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Unterbodensystem beschrieben sind, selbstverständlich auch im Zusammenhang mit dem erfindungsgemäßen Verfahren und/oder dem erfindungsgemäßen Fahrzeug und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist ein Unterbodensystem für ein Fahrzeug vorgesehen. Das Unterbodensystem weist eine Batterie zur Bereitstellung von Antriebsenergie für das Fahrzeug auf. Ferner umfasst das Unterbodensystem eine Schutzeinheit zum Schutz der Batterie. Weiterhin weist das Unterbodensystem eine Lichtleitereinheit zum Erkennen einer Störung der Schutzeinheit mit zumindest zwei Lichtwellenleitern auf, durch welche jeweils ein Lichtsignal leitbar ist. Ferner weist das Unterbodensystem eine Kontrolleinheit auf. Die Kontrolleinheit umfasst eine Messeinheit zum Ausführen einer optischen Messung zum Erfassen jeweils zumindest eines Lichtparameters der Lichtsignale, d. h., insbesondere zumindest eines Lichtparameters je Lichtsignal, und eine Auswerteeinheit zur Erkennung der Störung anhand einer Auswertung der optischen Messung. Jeder der Lichtwellenleiter erstreckt sich entlang jeweils eines flächigen Schutzabschnittes der Schutzeinheit, d. h., insbesondere, dass sich jeder der Lichtwellenleiter entlang eines eigenen, vorzugsweise separaten, Schutzabschnittes erstreckt. Die Auswerteeinheit ist dazu ausgebildet, die Auswertung der optischen Messung, insbesondere spezifisch, für jeden der Schutzabschnitte in Abhängigkeit von einem Vergleich der gemessenen Lichtparameter der Lichtsignale auszuführen.

Bei dem Fahrzeug kann es sich vorzugsweise um ein Kraftfahrzeug, z. B. in Form eines Elektrofahrzeuges, handeln. Das Unterbodensystem kann dazu ausgebildet sein, einen Bereich an einer Unterseite des Fahrzeuges, insbesondere unterhalb eines Fahrzeuginnenraums, zu überdecken. Bei der Batterie handelt es sich vorzugsweise um eine Traktionsbatterie, insbesondere in Form einer Hochvoltbatterie, für die Bereitstellung der Antriebsenergie des Fahrzeuges. Unter der Störung kann z. B. eine mechanische und/oder eine elektrische Störung des Unterbodensystems, insbesondere der Batterie, verstanden werden. Insbesondere kann die Störung auf einem externen Einfluss auf das Fahrzeug und/oder einem durch Umgebungsbedingungen hervorgerufenen Ereignis beim Betrieb des Fahrzeuges basieren. Somit kann die Störung vorzugsweise auch als externe Störung bezeichnet werden.

Die Schutzeinheit kann ein Schutzelement, insbesondere in Form eines Schutzbleches, umfassen, welches sich entlang der Unterseite des Fahrzeuges erstreckt. Das Schutzelement kann vorteilhafterweise ferner aus Metall und/oder Kunststoff ausgebildet sein. Die Batterie kann sich zumindest teilweise oder vollständig parallel zur Schutzeinheit erstrecken. Vorzugsweise ist die Schutzeinheit separat zur Batterie ausgeführt und/oder fluiddicht abgedichtet, um ein Eindringen von Schmutz und/oder Feuchtigkeit in die Batterie zu verhindern.

Die Lichtwellenleiter können jeweils zumindest eine oder mehrere optische Fasern zum Leiten des jeweiligen Lichtsignals aufweisen. Beispielsweise können die Lichtwellenleiter zumindest eine Glasfaser und/oder zumindest eine Kunststofffaser umfassen. Vorzugsweise sind die Lichtwellenleiter kabelartig und/oder flexibel ausgestaltet. Weiterhin können die Lichtwellenleiter an der Schutzeinheit und/oder der Batterie form-, kraft- und/oder stoffschlüssig befestigt sein. Beispielsweise können die Lichtwellenleiter mit der Schutzeinheit verclipst und/oder mittels Klebeband an der Schutzeinheit befestigt sein.

Die Kontrolleinheit kann eine Elektronik umfassen, welche die Messeinheit und/oder die Auswerteeinheit bildet. Vorzugsweise bilden die Messeinheit und die Auswerteeinheit eine gemeinsame Baugruppe. Beispielsweise können die Messeinheit und die Auswerteeinheit auf einer gemeinsamen Leiterplatte angeordnet sein. Die Auswerteeinheit kann vorzugsweise einen Prozessor und/oder einen Mikroprozessor umfassen. Ferner kann die Auswerteeinheit zumindest teilweise oder vollständig in ein zentrales Steuergerät des Fahrzeuges integriert sein. Es ist jedoch ebenfalls denkbar, dass die Auswerteeinheit zumindest teilweise oder vollständig in ein oder mehrere dezentrale Steuergeräte integriert ist.

Die Schutzeinheit kann, insbesondere strukturell und/oder geometrisch, in horizontale oder vertikale Bereiche unterteilt sein, die die flächigen Schutzabschnitte bilden. Die Schutzabschnitte können durch die Lichtwellenleiter definiert sein. Insbesondere können die Lichtwellenleiter derart angeordnet sein, dass sich jeder der Lichtwellenleiter über jeweils eine Teilfläche der Schutzeinheit erstreckt. Vorzugsweise kann vorgesehen sein, dass die Lichtwellenleiter kreuzungsfrei entlang des jeweiligen Schutzabschnittes angeordnet sind. Dazu können die Lichtwellenleiter über die jeweilige Teilfläche in einem Muster verlegt sein. Beispielsweise können sich die Lichtwellenleiter spiralförmig und/oder gewunden entlang des jeweiligen Schutzabschnittes erstrecken.

Insbesondere kann die optische Messung eine faseroptische Messung sein. Ferner kann die optische Messung mehrere einzelne Messschritte und/oder Einzelmessungen der Lichtparameter der Lichtsignale umfassen. Vorzugsweise können die Lichtparameter bei der optischen Messung optisch und/oder elektrisch erfasst werden. Unter der für jeden der Schutzabschnitte spezifischen Auswertung der optischen Messung kann eine abschnittsbezogene Auswertung verstanden werden. Dadurch, dass sich die Lichtwellenleiter entlang jeweils eines flächigen Schutzabschnittes erstrecken, kann das dem jeweiligen Lichtwellenleiter zugeordnete Lichtsignal spezifisch für den jeweiligen Schutzabschnitt sein. Jeder der Lichtparameter kann einen Messwert einer Eigenschaft des jeweiligen Lichtsignals umfassen. Durch den Vergleich der gemessenen Lichtparameter kann die Auswertung für jeden der Schutzabschnitte spezifisch ausgeführt werden, indem z. B. eine Abweichung eines der Lichtparameter festgestellt werden kann. Anhand der Abweichung kann auf eine Störung im jeweils zugeordneten Schutzabschnitt geschlossen werden. Die Messeinheit kann dazu ausgebildet sein, die Lichtparameter anhand eines Stromparameters zumindest eines Empfangsmittels, z. B. anhand einer Spannung und/oder einer Stromstärke, zu messen.

So ist es im Rahmen der vorliegenden Erfindung erkannt worden, dass eine kostengünstige und zuverlässige Erkennung der Störung im Unterbodensystem dadurch realisiert werden kann, dass die Lichtwellenleiter sich entlang jeweils eines flächigen Schutzabschnittes erstrecken, sodass jedes Lichtsignal im jeweiligen Lichtwellenleiter spezifisch für den zugeordneten Schutzabschnitt ist. Wenn einer der Lichtparameter der Lichtsignale abweicht, kann dadurch auf eine Störung im jeweiligen Schutzabschnitt geschlossen werden. Der Vergleich der gemessenen Lichtparameter ermöglicht es dabei insbesondere die Störung von Änderungen der Umgebungsbedingungen zu unterscheiden. Beispielsweise können Temperatureffekte auf die Elektronik oder das Material der Lichtwellenleiter von der Störung unterschieden werden, wenn sich die Temperatureffekte auf alle Lichtparameter in gleichem oder ähnlichem Umfang auswirken. Dazu können mittels des Vergleichs z. B. relative Differenzen zwischen den Lichtparametern als Störungen erkannt werden und Änderungen aller Lichtparameter herausgefiltert werden.

Weiterhin kann bei einem erfindungsgemäßen Unterbodensystem vorteilhafterweise vorgesehen sein, dass die Schutzeinheit zur Ausbildung eines Unterbodens zum Schutz der Batterie ausgebildet ist, wobei die Lichtleitereinheit zwischen der Batterie und der Schutzeinheit angeordnet ist. Beispielsweise kann zwischen der Schutzeinheit und der Batterie zumindest ein Zwischenraum, insbesondere in Form eines oder mehrerer Hohlräume, gebildet sein, in welchem die Lichtleitereinheit angeordnet ist. Unter dem Unterboden kann eine Unterseite des Fahrzeuges verstanden werden. Vorzugsweise bildet die Schutzeinheit einen Unterfahrschutz. Durch die Anordnung der Lichtleitereinheit zwischen der Batterie und der Schutzeinheit kann die Lichtleitereinheit vor Umwelteinflüssen geschützt sein. Ferner kann die Lichtleitereinheit dadurch von geringen mechanischen Einflüssen durch die Schutzeinheit abgeschirmt werden. Dabei kann die durch die Kontrolleinheit erkennbare Störung beispielsweise eine zumindest teilweise oder vollständige Zerstörung der Schutzeinheit umfassen. Wird die Schutzeinheit beschädigt, sodass ein Hindernis in den Zwischenraum eindringt, wird der Lichtwellenleiter in den betroffenen Schutzabschnitt beschädigt oder deformiert, sodass sich eine Änderung des jeweiligen Lichtparameters ergibt, die durch die Auswerteeinheit als Störung erkannt werden kann. Ferner kann die durch die Kontrolleinheit erkennbare Störung beispielsweise eine zumindest teilweise oder vollständige Zerstörung der Schutzeinheit und/oder ein Eindringen von Wasser in den Zwischenraum umfassen.

Vorzugsweise kann bei einem erfindungsgemäßen Unterbodensystem vorgesehen sein, dass die Schutzeinheit und/oder die Lichtleitereinheit separat zu der Batterie am Fahrzeug montierbar, und damit insbesondere separat demontierbar, ist. Somit können die Batterie, die Schutzeinheit und/oder die Lichtleiteinheit separate Baueinheiten bilden. Insbesondere kann die Schutzeinheit und/oder die Lichtleitereinheit lösbar an der Batterie angeordnet sein. Beispielsweise kann die Schutzeinheit mit der Batterie verschraubt sein. Dabei kann die Batterie ein separates Batteriegehäuse umfassen, in welchem Batteriezellen und/oder ein Batteriemanagementsystem der Batterie angeordnet ist. Dadurch kann eine Reparatur des Unterbodensystems, insbesondere nach dem Auftreten der Störung, vereinfacht sein. Ferner kann dadurch die Montage des Fahrzeuges vereinfacht sein, wenn die Lichtleitereinheit und/oder die Schutzeinheit nachträglich montiert werden können.

Weiterhin kann bei einem erfindungsgemäßen Unterbodensystem vorteilhafterweise vorgesehen sein, dass die Lichtparameter, insbesondere jeweils, eine Lichtintensität umfassen, wobei die Auswerteeinheit dazu ausgebildet ist, für jedes der Lichtsignale eine Änderung der, insbesondere jeweiligen, Lichtintensität zu erkennen und die Auswertung der optischen Messung anhand der Änderungen der Lichtintensitäten auszuführen, um die Störung zu erkennen. Dazu kann die Auswerteeinheit zumindest eine Empfangsdiode aufweisen, durch welche aus der Lichtintensität eine elektrische Spannung erzeugbar ist. Die elektrische Spannung kann, insbesondere in einer nachgelagerten Elektronik, ausgewertet werden. Als Ergebnis der Auswertung der optischen Messung kann durch die Auswerteeinheit ein Signal ausgebbar sein, welches die Störung signalisiert. Die Messung der Lichtintensität hat ferner den Vorteil, dass die Störung anhand einer Unterbrechung des Lichtflusses und/oder anhand von Reflexionseffekten erkannt werden kann. Dadurch kann die Zuverlässigkeit der Störungserkennung verbessert sein.

Vorzugsweise kann bei einem erfindungsgemäßen Unterbodensystem vorgesehen sein, dass die Lichtwellenleiter über den jeweiligen Schutzabschnitt mäanderförmig angeordnet sind. Vorzugsweise verläuft die Anordnung der Lichtwellenleiter entlang einer Messebene, die parallel zu einer Unterbodenebene zur Ausbildung des Unterbodens der Schutzeinheit ist, sodass die Störung bei einer Deformation der Schutzeinheit durch die Auswerteeinheit erkennbar ist. Bei der mäanderförmigen Erstreckung können die Lichtwellenleiter in Schlaufen mit parallelen Linien über den jeweils zugeordneten Schutzabschnitt angeordnet sein. Dabei sind die Lichtwellenleiter vorzugsweise kabelartig ausgestaltet. Dabei bilden die Lichtwellenleiter an den Rändern eine, insbesondere U-förmige, Kehre und verlaufen in entgegengesetzter Richtung zurück. Die Kehre kann vorzugsweise einen Radius von größer oder gleich 10 mm aufweisen. Durch die mäanderförmige Anordnung können die Lichtwellenleiter über den jeweiligen Schutzabschnitt in gleichmäßigen Abständen nebeneinander angeordnet sein. Ferner sorgt ein mäanderförmiges Muster der Lichtwellenleiter insbesondere für eine sehr gleichmäßige Abdeckung des Schutzabschnittes über die gesamte Fläche für die Erkennung der Störung. Somit kann die mäanderförmige Anordnung eine effiziente und gleichmäßige Verteilung der Lichtwellenleiter ermöglichen.

Weiterhin ist es bei einem erfindungsgemäßen Unterbodensystem denkbar, dass die Messeinheit zumindest zwei Empfangsmittel zum Empfang der Lichtsignale der Lichtwellenleiter und/oder ein gemeinsames Sendemittel zum Erzeugen der Lichtsignale für die Lichtwellenleiter aufweist. Dabei können die Empfangsmittel separate Elektronikbauteile sein. Vorzugsweise kann jedem Lichtwellenleiter ein eigenes Empfangsmittel zugeordnet sein. Das Sendemittel kann eine Lichtquelle zum Erzeugen der Lichtsignale aufweisen. Weiterhin kann das Sendemittel die Lichtsignale für die Vielzahl der Lichtwellenleiter als gemeinsames Sendemittel gemeinsam und/oder gleichzeitig erzeugen. Beispielsweise kann die Lichtleitereinheit eine Lichtweiche aufweisen, durch welche von dem Sendemittel erzeugtes Licht auf die Lichtwellenleiter aufgeteilt werden kann. Die Empfangsmittel können beispielsweise jeweils eine Empfangsdiode umfassen. Dadurch kann die Messeinheit eine einfache, kostengünstige Ausgestaltung aufweisen.

Weiterhin kann bei einem erfindungsgemäßen Unterbodensystem vorteilhafterweise vorgesehen sein, dass die Lichtwellenleiter zur Verbindung mit der Auswerteeinheit an einen, insbesondere gemeinsamen, Steckverbinder angeschlossen sind. Der Steckverbinder kann lösbar an einem Gegenstecker der Auswerteeinheit befestigt sein. Weiterhin kann der Steckverbinder die Lichtweiche zum Aufteilen des von dem Sendemittel erzeugten Lichtes auf die Lichtwellenleiter aufweisen. Dabei kann der Steckverbinder für jeden der Lichtwellenleiter je einen Ein- und Ausgang für die Lichtsignale aufweisen. Dadurch ist eine einfache Montage der Lichtleitereinheit mit der Auswerteeinheit möglich. Ferner kann durch den Steckverbinder eine robuste Anschlussmöglichkeit zwischen der Lichtleitereinheit und der Auswerteeinheit bereitgestellt werden.

Ferner kann bei einem erfindungsgemäßen Unterbodensystem vorteilhafterweise vorgesehen sein, dass die Kontrolleinheit ein Diagnosemittel zur, insbesondere elektrischen und/oder optischen, Überprüfung eines Anschlusses des Steckverbinders aufweist. Das Diagnosemittel kann ein elektrisches und/oder elektronisches Bauelement und/oder ein Modul umfassen, welches in die Kontrolleinheit integriert ist. Ferner kann der Steckverbinder ein elektrisches Anschlussmittel aufweisen, welches mit dem Diagnosemittel verbunden ist. Dabei kann beispielsweise über eine Widerstandsmessung des Anschlussmittels durch das Diagnosemittel ermittelt werden, ob der Stecker mit der Kontrolleinheit verbunden ist. Weiterhin ist es denkbar, dass das Diagnosemittel mit dem Steckverbinder zur Ausführung einer optischen Überprüfung eines Anschlusses des Steckverbinders ausgebildet ist. Beispielsweise können das Diagnosemittel und der Steckverbinder zur Ausführung einer Lichtdurchgangsprüfung, einer Messung der optischen Leistung und/oder zur Ausführung eines OTDR-Tests (Optical Time Domain Reflectometer Test) ausgebildet sein. Durch die Überprüfung des Anschlusses des Steckverbinders kann bei Auftreten einer Störung ausgeschlossen werden, dass sich der Steckverbinder gelöst hat. Dazu kann die Überprüfung des Anschlusses des Steckverbinders beispielsweise bei der Auswertung der optischen Messung ausgeführt und/oder berücksichtigt werden.

Im Rahmen der Erfindung ist es weiterhin denkbar, dass die Lichtwellenleiter eine strukturierte Oberfläche zur Aufnahme einer Flüssigkeit aufweisen, sodass die Störung bei der Aufnahme der Flüssigkeit in der strukturierten Oberfläche durch die Auswerteeinheit erkennbar ist. Es kann vorgesehen sein, dass die strukturierte Oberfläche sich über die gesamte Länge der Lichtwellenleiter erstreckt. Es ist jedoch ebenso denkbar, dass sich die strukturierte Oberfläche lediglich über einen begrenzten Teilbereich der Länge der Lichtwellenleiter erstreckt. Dabei kann vorgesehen sein, dass der Teilbereich an einer Vertiefung der Schutzeinheit, insbesondere an der tiefsten Stelle der Schutzeinheit, angeordnet ist. In der Vertiefung kann sich dabei Wasser sammeln, das beim Erkennen der Störung detektiert wird. Die strukturierte Oberfläche kann aufgeraut sein, d. h., insbesondere eine höhere Rauigkeit aufweisen, als umliegende Oberflächenbereiche der Lichtwellenleiter. Bei einem Wassereintritt kann der Lichtwellenleiter somit an der strukturierten Oberfläche mit Wasser in Kontakt kommen, was zu einer Erhöhung der Lichtintensität am Ausgang führen kann, da aufgrund von Reflektion weniger Licht an der aufgerauten Stelle aus dem Lichtwellenleiter austritt.

Weiterhin ist es bei einem erfindungsgemäßen Unterbodensystem denkbar, dass die Lichtwellenleiter zum Leiten der Lichtsignale einen Kunststoff, insbesondere in Form von Acrylglas, aufweisen. Das Acrylglas kann ein Polymethylmethacrylat (PMMA) umfassen oder aus PMMA bestehen. Durch die Ausgestaltung der Lichtwellenleiter aus einem Kunststoff kann eine hohe Bruchresistenz erzielt werden. Durch das Acrylglas kann ferner eine hohe Flexibilität, Leichtigkeit und eine gute Lichtleitung der Lichtwellenleiter ermöglicht werden. Dies ermöglicht beispielsweise eine enge Anordnung der Schlaufen bei einer mäanderförmigen Anordnung der Lichtwellenleiter.

Weiterhin ist es bei einem erfindungsgemäßen Unterbodensystem denkbar, dass die Kontrolleinheit ein Ausgabemittel aufweist, welches dazu ausgebildet ist, in Abhängigkeit von der Erkennung der Störung ein Warnsignal an ein fahrzeugexternes und/oder fahrzeuginternes Informationssystem auszugeben. Dabei kann eine Übermittlung des Warnsignals an das Informationssystem unmittelbar, z. B. durch Senden des Warnsignals an das Informationssystem durch das Ausgabemittel, oder mittelbar, z. B. über ein zentrales Steuergerät des Fahrzeuges, erfolgen. Das Warnsignal kann beispielsweise eine Information über die Störung und/oder den Störungstyp umfassen. Das Ausgabemittel kann zur kabelgebundenen und/oder drahtlosen Ausgabe des Warnsignals ausgebildet sein. Ein fahrzeugexternes Informationssystem kann beispielsweise in eine zentrale Leitstelle oder ein mobiles Endgerät integriert sein. Ein fahrzeuginternes Informationssystem kann beispielsweise eine Instrumententafel, ein Display und/oder ein Kombi-Instrument umfassen. Durch das Warnsignal kann der Fahrer und/oder ein externer Dienst über die Störung informiert werden. Ferner kann ein Fahrbetrieb des Fahrzeuges anhand des Warnsignals, z. B. für eine Werkstattfahrt, einschränkbar sein.

Vorzugsweise kann bei einem erfindungsgemäßen Unterbodensystem vorgesehen sein, dass die Auswerteeinheit dazu ausgebildet ist, zumindest zwei Störungstypen der Störung in Abhängigkeit von dem Lichtparameter zu unterscheiden. Die Störungstypen können insbesondere eine mechanische Beschädigung und/oder einen Wasserkontakt zumindest eines der Lichtwellenleiter umfassen. Dabei kann vorgesehen sein, dass die Auswerteeinheit dazu ausgebildet ist, den Störungstyp anhand der Lichtparameter, insbesondere anhand einer Änderung des Lichtparameters, zu erkennen und/oder zu unterscheiden. Beispielsweise kann die Auswerteeinheit dazu ausgebildet sein, die mechanische Beschädigung anhand einer Verringerung des jeweiligen Lichtparameters, insbesondere der jeweiligen Lichtintensität, und/oder der Wasserkontakt anhand einer Erhöhung des jeweiligen Lichtparameters, insbesondere der jeweiligen Lichtintensität, zu erkennen. Dadurch kann der Funktionsumfang der Kontrolleinheit beim Erkennen der Störung erweitert sein. Beispielsweise kann vorgesehen sein, dass das Warnsignal eine Information über den erkannten Störungstyp der Störung aufweist.

Ferner kann bei einem erfindungsgemäßen Unterbodensystem vorteilhafterweise vorgesehen sein, dass die Lichtleitereinheit zumindest einen weiteren Lichtwellenleiter, durch welchen ein, insbesondere weiteres, Lichtsignal für die optische Messung leitbar ist, aufweist. Somit kann die Lichtleitereinheit vorzugsweise zumindest drei oder genau drei Lichtwellenleiter umfassen. Dabei können die gemessenen Lichtparameter aller Lichtwellenleiter bei der Auswertung der optischen Messung berücksichtigt werden. Wenn die Störung zwischen zwei aneinandergrenzenden Schutzabschnitten vorliegt, können dort zwei Lichtwellenleiter nebeneinander liegen, die beide von der Störung betroffen sind. Durch den zumindest einen weiteren Lichtwellenleiter kann daher eine (unveränderte) Referenz bereitgestellt werden, durch welche die Änderung der Lichtparameter der beiden nebeneinanderliegenden Lichtwellenleiter als Störung erkannt werden kann. Somit kann die Zuverlässigkeit bei der Erkennung der Störung durch den zumindest einen weiteren Lichtwellenleiter verbessert sein.

Gemäß einem weiteren Aspekt der Erfindung ist ein Verfahren zum Erkennen einer Störung eines erfindungsgemäßen Unterbodensystems vorgesehen. Das Verfahren umfasst, insbesondere in Form von Verfahrensschritten:
- Erzeugen von Lichtsignalen, die durch jeweils einen Lichtwellenleiter von zumindest zwei Lichtwellenleitern des Unterbodensystems geleitet werden, insbesondere durch eine Kontrolleinheit des Unterbodensystems,
- Ausführen einer optischen Messung zum Erfassen jeweils zumindest eines Lichtparameters der Lichtsignale, insbesondere durch die Kontrolleinheit,
- Auswerten der optischen Messung, insbesondere spezifisch, für mehrere Schutzabschnitte des Unterbodensystems, d. h., insbesondere für jeden der Schutzabschnitte, in Abhängigkeit von einem Vergleich der gemessenen Lichtparameter der Lichtsignale, insbesondere durch die Kontrolleinheit.

Somit bringt ein erfindungsgemäßes Verfahren die gleichen Vorteile mit sich, wie sie bereits ausführlich mit Bezug auf ein erfindungsgemäßes Unterbodensystem beschrieben worden sind.

Gemäß einem weiteren Aspekt der Erfindung ist ein Fahrzeug vorgesehen. Das Fahrzeug weist ein erfindungsgemäßes Unterbodensystem auf.

Somit bringt ein erfindungsgemäßes Fahrzeug die gleichen Vorteile mit sich, wie sie bereits ausführlich mit Bezug auf ein erfindungsgemäßes Unterbodensystem und/oder ein erfindungsgemäßes Verfahren beschrieben worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Figur 1: eine Lichtleitereinheit und eine Kontrolleinheit eines erfindungsgemäßen Unterbodensystems,
- Figur 2: einen Lichtwellenleiter der Lichtleitereinheit bei einer durch eine Flüssigkeit verursachten Störung,
- Figur 3 + 4: Vergleiche von Lichtparametern bei unterschiedlichen Störungstypen,
- Figur 5: ein Ablauf eines erfindungsgemäßen Verfahrens zum Erkennen einer Störung des Unterbodensystems, und
- Figur 6: ein erfindungsgemäßes Fahrzeug mit dem Unterbodensystem.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

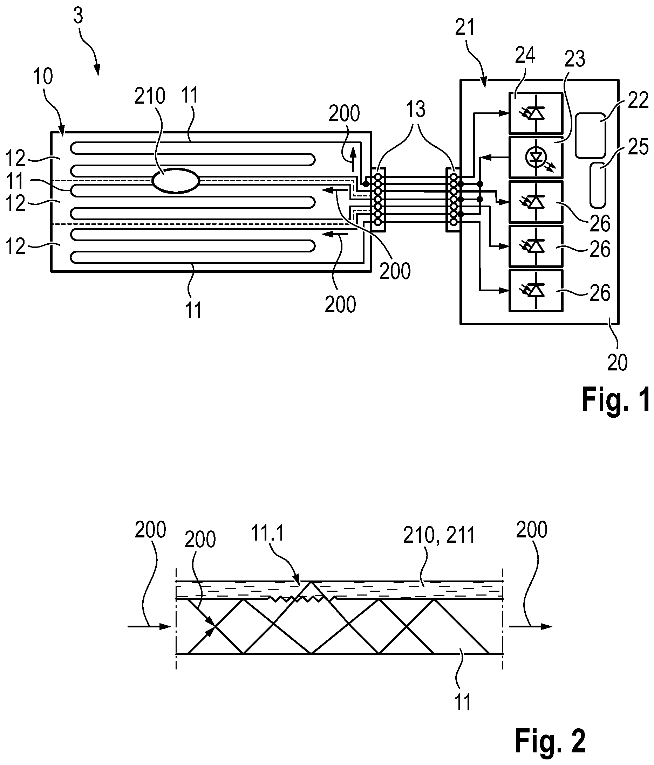

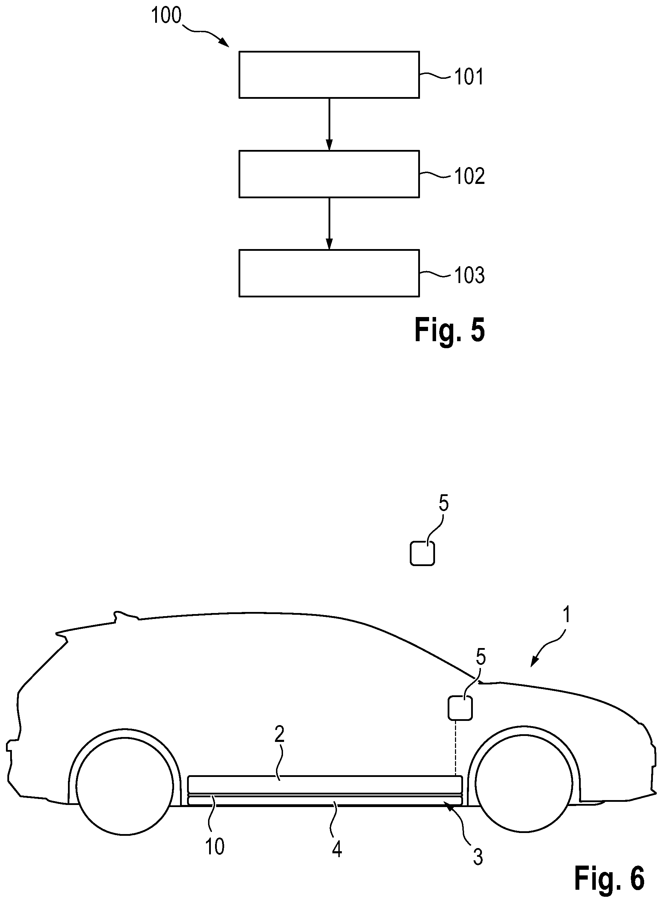

Fig. 1 zeigt eine Lichtleitereinheit 10 und eine Kontrolleinheit 20 eines erfindungsgemäßen Unterbodensystems 3 für ein erfindungsgemäßes Fahrzeug 1 in einem ersten Ausführungsbeispiel. Fig. 6 zeigt die Integration des Unterbodensystems 3 in das Fahrzeug 1. Das Unterbodensystem 3 weist eine Batterie 2 zur Bereitstellung von Antriebsenergie für das Fahrzeug 1 und eine Schutzeinheit 4 zum Schutz der Batterie 2 auf. Dazu ist die Schutzeinheit 4 zur Ausbildung eines Unterbodens des Fahrzeuges 1, d. h., insbesondere als Unterfahrschutz, ausgebildet.

Die Lichtleitereinheit 10 ist zum Erkennen einer Störung 210 der Schutzeinheit 4 mit zumindest zwei, hier drei, Lichtwellenleitern 11 ausgebildet. Ferner ist die Lichtleitereinheit 10 zwischen der Batterie 2 und der Schutzeinheit 4 angeordnet. Dabei sind die Schutzeinheit 4 und die Lichtleitereinheit 10 separat zu der Batterie 2 ausgeführt und am Fahrzeug 1 demontierbar befestigt.

Wie in Fig. 1 gezeigt, erstrecken sich die Lichtwellenleiter 11 entlang jeweils eines flächigen Schutzabschnittes 12 der Schutzeinheit 4. Dazu sind die Lichtwellenleiter 11 über den jeweiligen Schutzabschnitt 12 mäanderförmig angeordnet. Durch die Lichtwellenleiter 11 ist jeweils ein Lichtsignal 200 leitbar. Dazu können die Lichtwellenleiter 11 zum Leiten der Lichtsignale 200 z. B. einen Kunststoff, insbesondere in Form von Acrylglas, umfassen.

Weiterhin umfasst das Unterbodensystem 3 die Kontrolleinheit 20 mit einer Messeinheit 21 zum Ausführen einer optischen Messung 102 zum Erfassen jeweils zumindest eines Lichtparameters 201, insbesondere in Form einer Lichtintensität, der Lichtsignale 200 und mit einer Auswerteeinheit 22 zur Erkennung der Störung 210 anhand einer Auswertung der optischen Messung 102. Die Auswerteeinheit 22 ist ferner dazu ausgebildet, die Auswertung der optischen Messung 102 spezifisch für jeden der Schutzabschnitte 12 der Schutzeinheit 4 in Abhängigkeit von einem Vergleich der gemessenen Lichtparameter 201 auszuführen. Dazu ist die Auswerteeinheit 22 insbesondere dazu ausgebildet, für jedes der Lichtsignale 200 eine Änderung der Lichtintensität zu erkennen und die Auswertung der optischen Messung 102 anhand der Änderungen der Lichtintensitäten auszuführen, um die Störung 210 zu erkennen. Bei der Störung 210 kann es sich um eine mechanische Beschädigung zumindest eines der Lichtwellenleiter 11, z. B. infolge einer Deformation der Schutzeinheit 4 durch Eindringen eines Hindernisses, handeln. Ferner kann es sich bei der Störung 210 um einen Kontakt der Lichtwellenleiter 11 mit Feuchtigkeit, z. B. infolge einer Undichtigkeit der Schutzeinheit 4, handeln. Um die Störung 210 aufgrund der Feuchtigkeit zu erkennen, können die Lichtwellenleiter 11, wie in Fig. 2 dargestellt, eine strukturierte Oberfläche 11.1 zur Aufnahme einer Flüssigkeit 211 aufweisen, sodass die Störung 210 bei der Aufnahme der Flüssigkeit 211 in der strukturierten Oberfläche 11.1 durch die Auswerteeinheit 22 erkennbar ist.

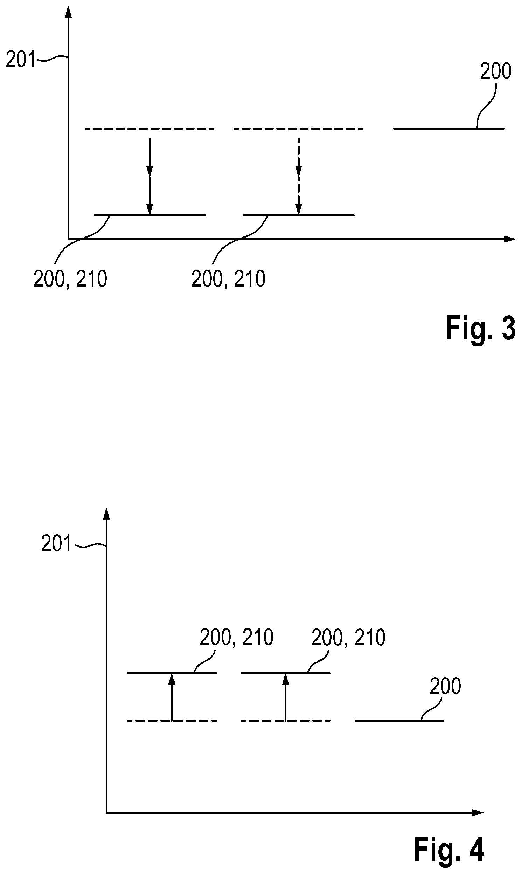

Wenn die Störung 210, wie in Fig. 1 gezeigt, zwischen zwei aneinander angrenzenden Schutzabschnitten 12 vorliegt, können die dort nebeneinander liegenden Lichtwellenleiter 11 beide von der Störung 210 betroffen sein. Dabei führt die Störung 210 in Form der Beschädigung, wie in Fig. 3 gezeigt, insbesondere zu einer Verringerung des Lichtparameters 201 der betroffenen Lichtwellenleiter 11 und die Störung 210 in Form der Aufnahme der Flüssigkeit 211, wie in Fig. 4 gezeigt, zu einer Erhöhung des Lichtparameters 201 der betroffenen Lichtwellenleiter 11. Die Auswerteeinheit 22 ist dabei vorzugsweise dazu ausgebildet, zumindest zwei Störungstypen der Störung 210 in Abhängigkeit von dem Lichtparameter 201 zu unterscheiden. Durch den dritten Lichtwellenleiter 11 kann z. B. eine Referenz bereitgestellt werden, durch welche die Änderung der Lichtparameter 201 der beiden nebeneinanderliegenden Lichtwellenleiter 11 als Störung 210 erkannt werden kann. Die Kontrolleinheit 20 weist ein Ausgabemittel 25 auf, welches dazu ausgebildet ist, in Abhängigkeit von der Erkennung der Störung 210 ein Warnsignal an ein fahrzeuginternes Informationssystem 5 in Form eines Bedienteils des Fahrzeuges 1 oder eines fahrzeugexternen Informationssystems 5, z. B eines mobilen Endgerätes, auszugeben.

Für eine einfache und robuste Ausgestaltung sind die Lichtwellenleiter 11 zur Verbindung mit der Auswerteeinheit 22 an einen Steckverbinder 13 angeschlossen. Um beim Erkennen der Störung 210 eine Fehlstellung des Steckverbinders 13 auszuschließen, weist die Kontrolleinheit 20 ferner ein Diagnosemittel 24 zur Überprüfung eines Anschlusses des Steckverbinders 13 auf. Weiterhin weist die Messeinheit 21 zumindest zwei, hier drei, Empfangsmittel 26 zum Empfang der Lichtsignale 200 der Lichtwellenleiter 11 und ein gemeinsames Sendemittel 23 zum Erzeugen 101 der Lichtsignale 200 für die Lichtwellenleiter 11 auf.

Somit kann ein erfindungsgemäßes Verfahren 100 zum Erkennen der Störung 210 des Unterbodensystems 3 gemäß dem Ablauf in Fig. 5 ausgeführt werden, indem zunächst ein Erzeugen 101 der Lichtsignale 200, die durch die Lichtwellenleiter 11 geleitet werden, erfolgt. Durch die Kontrolleinheit 20 kann dann die optische Messung 102 und ein Auswerten 103 der optischen Messung 102 in Abhängigkeit von dem Vergleich der gemessenen Lichtparameter 201 ausgeführt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, im Rahmen des durch die Patentansprüche definierten Schutzumfangs frei miteinander kombiniert werden, ohne den Rahmen der vorliegenden Erfindung zu verlassen.

### Bezugszeichenliste

- 1: Fahrzeug
- 2: Batterie
- 3: Unterbodensystem
- 4: Schutzeinheit
- 5: Informationssystem

- 10: Lichtleitereinheit
- 11: Lichtwellenleitern
- 11.1: strukturierte Oberfläche
- 12: Schutzabschnitt
- 13: Steckverbinder

- 20: Kontrolleinheit
- 21: Messeinheit
- 22: Auswerteeinheit
- 23: Sendemittel
- 24: Diagnosemittel
- 25: Ausgabemittel
- 26: Empfangsmittel

- 100: Verfahren
- 101: Erzeugen von 200
- 102: optische Messung
- 103: Auswerten von 102

- 200: Lichtsignal
- 201: Lichtparameter

- 210: Störung
- 211: Flüssigkeit

## Patentansprüche

1. Unterbodensystem (3) für ein Fahrzeug (1) aufweisend
eine Batterie (2) zur Bereitstellung von Antriebsenergie für das Fahrzeug (1),
eine Schutzeinheit (4) zum Schutz der Batterie (2),
eine Lichtleitereinheit (10) zum Erkennen einer Störung (210) der Schutzeinheit (4) mit zumindest zwei Lichtwellenleitern (11), durch welche jeweils ein Lichtsignal (200) leitbar ist, und
eine Kontrolleinheit (20) mit einer Messeinheit (21) zum Ausführen einer optischen Messung (102) zum Erfassen jeweils zumindest eines Lichtparameters (201) der Lichtsignale (200) und einer Auswerteeinheit (22) zur Erkennung der Störung (210) anhand einer Auswertung der optischen Messung (102),
**dadurch gekennzeichnet,**
**dass** sich jeder der Lichtwellenleiter (11) entlang jeweils eines flächigen Schutzabschnittes (12) der Schutzeinheit (4) erstreckt, wobei die Auswerteeinheit (22) dazu ausgebildet ist, die Auswertung der optischen Messung (102) für jeden der Schutzabschnitte (12) in Abhängigkeit von einem Vergleich der gemessenen Lichtparameter (201) der Lichtsignale (200) auszuführen.

2. Unterbodensystem (3) nach Anspruch 1,
**dadurch gekennzeichnet,**
**dass** die Schutzeinheit (4) zur Ausbildung eines Unterbodens zum Schutz der Batterie (2) ausgebildet ist, wobei die Lichtleitereinheit (10) zwischen der Batterie (2) und der Schutzeinheit (4) angeordnet ist.

3. Unterbodensystem (3) nach Anspruch 1 oder 2,
**dadurch gekennzeichnet,**
**dass** die Schutzeinheit (4) und/oder die Lichtleitereinheit (10) separat zu der Batterie (2) am Fahrzeug (1) montierbar ist.

4. Unterbodensystem (3) nach einem der vorhergehenden Ansprüche,
**dadurch gekennzeichnet,**
**dass** die Lichtparameter (201) eine Lichtintensität umfassen, wobei die Auswerteeinheit (22) dazu ausgebildet ist, für jedes der Lichtsignale (200) eine Änderung der Lichtintensität zu erkennen und die Auswertung der optischen Messung (102) anhand der Änderungen der Lichtintensitäten auszuführen, um die Störung (210) zu erkennen.

5. Unterbodensystem (3) nach einem der vorhergehenden Ansprüche,
**dadurch gekennzeichnet,**
**dass** die Lichtwellenleiter (11) über den jeweiligen Schutzabschnitt (12) mäanderförmig angeordnet sind.

6. Unterbodensystem (3) nach einem der vorhergehenden Ansprüche,
**dadurch gekennzeichnet,**
**dass** die Messeinheit (21) zumindest zwei Empfangsmittel (26) zum Empfang der Lichtsignale (200) der Lichtwellenleiter (11) und ein gemeinsames Sendemittel (23) zum Erzeugen (101) der Lichtsignale (200) für die Lichtwellenleiter (11) aufweist.

7. Unterbodensystem (3) nach einem der vorhergehenden Ansprüche,
**dadurch gekennzeichnet,**
**dass** die Lichtwellenleiter (11) zur Verbindung mit der Auswerteeinheit (22) an einen Steckverbinder (13) angeschlossen sind.

8. Unterbodensystem (3) nach Anspruch 7,
**dadurch gekennzeichnet,**
**dass** die Kontrolleinheit (20) ein Diagnosemittel (24) zur Überprüfung eines Anschlusses des Steckverbinders (13) aufweist.

9. Unterbodensystem (3) nach einem der vorhergehenden Ansprüche,
**dadurch gekennzeichnet,**
**dass** die Lichtwellenleiter (11) eine strukturierte Oberfläche (11.1) zur Aufnahme einer Flüssigkeit (211) aufweisen, sodass die Störung (210) bei der Aufnahme der Flüssigkeit (211) in der strukturierten Oberfläche (11.1) durch die Auswerteeinheit (22) erkennbar ist.

10. Unterbodensystem (3) nach einem der vorhergehenden Ansprüche,
**dadurch gekennzeichnet,**
**dass** die Lichtwellenleiter (11) zum Leiten der Lichtsignale (200) einen Kunststoff in Form von Acrylglas aufweisen.

11. Unterbodensystem (3) nach einem der vorhergehenden Ansprüche,
**dadurch gekennzeichnet,**
**dass** die Kontrolleinheit (20) ein Ausgabemittel (25) aufweist, welches dazu ausgebildet ist, in Abhängigkeit von der Erkennung der Störung (210) ein Warnsignal an ein fahrzeugexternes und/oder fahrzeuginternes Informationssystem (5) auszugeben.

12. Unterbodensystem (3) nach einem der vorhergehenden Ansprüche,
**dadurch gekennzeichnet,**
**dass** die Auswerteeinheit (22) dazu ausgebildet ist, zumindest zwei Störungstypen der Störung (210) in Abhängigkeit von dem Lichtparameter (201) zu unterscheiden.

13. Unterbodensystem (3) nach einem der vorhergehenden Ansprüche,
**dadurch gekennzeichnet,**
**dass** die Lichtleitereinheit (10) zumindest einen weiteren Lichtwellenleiter (11), durch welchen ein Lichtsignal (200) für die optische Messung (102) leitbar ist, aufweist.

14. Verfahren (100) zum Erkennen einer Störung (210) eines Unterbodensystems (3) nach einem der vorhergehenden Ansprüche,
umfassend:
- Erzeugen (101) von Lichtsignalen (200), die durch jeweils einen Lichtwellenleiter (11) von zumindest zwei Lichtwellenleitern (11) des Unterbodensystems (3) geleitet werden,
- Ausführen einer optischen Messung (102) zum Erfassen jeweils zumindest eines Lichtparameters (201) der Lichtsignale (200),
- Auswerten (103) der optischen Messung (102) für mehrere Schutzabschnitte (12) des Unterbodensystems (3) in Abhängigkeit von einem Vergleich der gemessenen Lichtparameter (201) der Lichtsignale (200).

15. Fahrzeug (1) aufweisend
ein Unterbodensystem (3) nach einem der Ansprüche 1 bis 13.
